# EUROPÄISCHE PATENTANMELDUNG

(11) **EP 4 039 406 A1**
(43) Veröffentlichungstag der Anmeldung: **10.08.2022**
(21) Anmeldenummer: 22153704.6
(22) Anmeldetag: 27.01.2022
(51) Int. Cl.: B23Q 3/06, B23Q 7/02, B23B 31/12, B24B 41/06, B24B 37/08, B24B 37/28

(54) **WERKSTÜCKHALTER**

(30) Priorität: 03.02.2021 DE 102021102453
(71) Anmelder: LEISTRITZ PRODUKTIONSTECHNIK GMBH, 90459 Nürnberg (DE)
(72) Erfinder: Vater, Bernhard, 92714 Pleystein (DE)
(74) Vertreter: Lindner Blaumeier Patent- und Rechtsanwälte

(57) **Zusammenfassung**

Werkstückhalter zur Aufnahme mehrerer, insbesondere an beiden Enden, zu bearbeitender länglicher Werkstücke, umfassend eine Haltescheibe (2) mit mehreren um den Umfang verteilt angeordneten Bohrungen (3), wobei in jeder Bohrung (3) eine jeweils ein zu bearbeitendes Werkstück aufnehmende Buchse (5) aufgenommen ist, die an der Haltescheibe (2) fixiert ist, dadurch gekennzeichnet, dass jeder Buchse (5) über wenigstens eine Form- und/oder Kraftschlussverbindung lösbar in der Bohrung (3) fixiert ist.

## Beschreibung

Die Erfindung betrifft einen Werkstückhalter zur Aufnahme mehrerer, insbesondere an beiden Enden, zu bearbeitender länglicher Werkstücke, umfassend eine Haltescheibe mit mehreren um den Umfang verteilt angeordneten Bohrungen, wobei in jeder Bohrung eine jeweils ein zu bearbeitendes Werkstück aufnehmende Buchse aufgenommen ist, die an der Haltescheibe fixiert ist.

Ein solcher scheibenförmiger, üblicherweise kreisrunder Werkstückhalter, der oft auch als Schleifstern bezeichnet wird, dient der Aufnahme bzw. Halterung einer Vielzahl länglicher Werkstücke, die in entsprechenden, am Werkstückhalter vorgesehenen Buchsen aufgenommen sind und aus diesen üblicherweise beidseits hervorstehen. Ein Beispiel sind Wälzkörper in Form von Zylinder- oder Tonnenrollen, die stirnseitig plan geschliffen werden müssen, um eine hohe Parallelität der Stirnflächen zu erreichen. Dies geschieht üblicherweise in einem Doppelseitenplanschleifverfahren. Hierzu wird der Werkstückhalter respektive der Schleifstern zwischen Schleifscheiben gesetzt, die die Stirnseiten bearbeiten.

Ein bekannter Werkstückhalter besteht hierfür aus einer Haltescheibe, die üblicherweise eine Dicke im Bereich weniger Millimeter bis etwas über einen Zentimeter bei einem Durchmesser von zumeist ca. 500 mm oder mehr aufweist. Diese metallene Haltescheibe wird mit einer Vielzahl von randseitig angebrachten, um den Umfang verteilten Bohrungen versehen, in die jeweils eine metallene Buchse aus einem gehärteten Material eingesetzt wird. Diese Buchsen werden durch Hartlöten fest und unlösbar stoffschlüssig mit der Haltescheibe verbunden. Problematisch hierbei ist, dass bei dem Hartlöten, das bei Temperaturen von üblicherweise über 450°C erfolgt, ein hoher Wärmeeintrag in die Haltescheibe erfolgt, der zu einem unerwünschten geringen Verzug der Haltescheibe führen kann. Darüber hinaus bedingt dieses Hartlöten auch, dass die einzelnen Bohrungen und damit die einzelnen Buchsen in Umfangsrichtung entsprechend weit voneinander beabstandet sind, damit das Einlöten einer Buchse und der Temperatureintrag sich nicht nachteilig auf die Lötverbindung einer benachbarten Buchse auswirkt. Das heißt, dass der Werkstückhalter nur mit einer niedrigeren Anzahl an Werkstücken bestückt werden kann, was sich nachteilig auf den Durchsatz auswirkt.

Der Erfindung liegt damit das Problem zugrunde, einen demgegenüber verbesserten Werkstückhalter anzugeben.

Zur Lösung dieses Problems ist bei einem Werkstückhalter der eingangs genannten Art erfindungsgemäß vorgesehen, dass jede Buchse über wenigstens eine Form- und/oder Kraftschlussverbindung lösbar in der Bohrung fixiert ist.

Der erfindungsgemäße Werkstückhalter sieht vor, die einzelnen gehärteten Buchsen, die auch als Verschleißbuchsen bezeichnet werden können, lösbar an der Haltescheibe respektive in der jeweiligen Bohrung zu fixieren, was über form- und/oder kraftschlüssige Verbindungen erfolgt. Diese lösbare Buchsenhalterung hat eine Reihe von Vorteilen. Zum einen ist, anders als bisher beim Hartlöten, wo eine Stoffschlussverbindung realisiert wurde, infolge der form- und/oder kraftschlüssigen Fixierung kein Wärmeeintrag in die Haltescheibe zur Buchsenfixierung gegeben, so dass sich, anders als im Stand der Technik, keinerlei hieraus resultierende Probleme hinsichtlich eines Scheibenverzugs ergeben. Resultierend aus dem nicht gegebenen Wärmeeintrag besteht des Weiteren die Möglichkeit, die Bohrungen und damit die Buchsen in Umfangsrichtung deutlich enger zu setzen, da letztlich kein aus wärmetechnischen Gesichtspunkten erforderlicher Mindestabstand einzuhalten ist. Vielmehr können die Bohrungen sehr eng mit einem relativ geringen Abstand zueinander positioniert werden und dementsprechend dann auch die Buchsen, was hier vorteilhaft eine deutlich höhere Bestückung ermöglicht als bei bisher bekannten Werkstückhaltern respektive Schleifsternen, wodurch der Durchsatz beachtlich erhöht werden kann, trotz gleichbleibenden Durchmessers der Haltescheibe. Und schließlich ermöglicht die lösbare Anordnung der Buchsen einen Austausch einzelner oder aller Buchsen, wenn diese verschlissen sind, und eine Wiederverwendung der Haltescheibe. Während im Stand der Technik bei Verschleiß der hartgelöteten Buchsen der gesamte Werkstückhalter unbrauchbar wird, ist bei dem erfindungsgemäßen Werkstückhalter die Haltescheibe problemlos wiederverwendbar, lediglich die einzelnen Buchsen sind durch Lösen der Form- und/oder Kraftschlussverbindung von der Haltescheibe zu lösen und gegen neue auszutauschen, die wiederum über die gleiche Form- und/oder Kraftschlussverbindung an der Haltescheibe fixiert werden.

Zweckmäßig ist es dabei, wenn jede einzelne Buchse, die in die jeweilige Bohrung von einer Scheibenseite her eingeschoben wird, in der Einschieberichtung an der Haltescheibe in der Montageendstellung axial abgestützt ist, so dass sie über die Form- und/oder Kraftschlussverbindung nur in die entgegengesetzte Richtung gesichert werden muss. Zu diesem Zweck ist es denkbar, dass jede Bohrung eine radial nach innen ragende Anschlagschulter aufweist, an der die Buchse, in der Montageendstellung, axial abgestützt ist. Das heißt, dass die Buchse beispielsweise mit ihrer vorlaufenden Stirnseite gegen eine Anschlagschulter läuft und in der Montagestellung abgestützt ist. Denkbar ist es auch, dass die Buchse einen radial nach außen ragenden Ringbund aufweist, mit dem sie axial an der Haltescheibe abgestützt ist, wobei diese Abstützung entweder auch an einer radial nach innen ragenden Anschlagschulter erfolgen kann, oder an der Haltescheibenfläche, die die Bohrung berandet, selbst.

Gemäß einer ersten, besonders zweckmäßigen Erfindungsvariante kann vorgesehen sein, dass jede Bohrung ein Innengewinde und jede Buchse ein Außengewinde aufweist, mit dem die Buchse in das Innengewinde geschraubt ist. Bei dieser ersten Erfindungsvariante kommt also eine reine Schraubverbindung als form- und kraftschlüssige Verbindung zum Einsatz. Die Buchse wird mit ihrem Innengewinde auf einfache Weise bis in die Montageendstellung in die Bohrung eingeschraubt, wobei diese Montageendstellung bevorzugt beispielsweise durch Anlaufen gegen eine Anschlagschulter definiert ist. Diese Variante ist dahingehend besonders zweckmäßig, als die Fixierung nur zwischen den beiden beteiligten Bauteilen, nämlich der Haltescheibe und der Buchse, erfolgt, ein zusätzliches Befestigungselement ist zur Buchsenfixierung nicht erforderlich. Im Falle eines erforderlichen Wechsels ist lediglich die betroffene Buchse wieder herauszuschrauben und eine neue Buchse einzuschrauben.

Dabei ist es zweckmäßig, wenn an jeder Buchse eine Werkzeugaufnahme für ein der Montage und Demontage der Buchse dienendes Werkzeug vorgesehen ist. An dieser Werkzeugaufnahme greift das jeweilige Montagewerkzeug an, so dass die Buchse auf einfache Weise ein- und ausgeschraubt werden kann. Denkbar ist es, die Werkzeugaufnahme in Form wenigstens zweier in die Buchse stirnseitig eingebrachter Vertiefungen, in die entsprechende Vorsprünge des Werkzeugs eingreifen, auszuführen. Beispielsweise sind zwei solcher Vertiefungen oder Nuten, einander diametral gegenüberliegend, stirnseitig in die Buchse eingebracht, in die entsprechende Vorsprünge des Werkzeugs eingreifen. Im einfachsten Fall denkbar wäre hier sogar die Verwendung eines Schraubendrehers, bevorzugt jedoch kommt ein Werkzeug zum Einsatz, das einen entsprechenden, in die Buchse eingreifenden zylindrischen Führungsabschnitt aufweist, an den sich ein Ringbund anschließt, der in der Montagestellung auf der Buchsenstirnseite aufsitzt und an dem entsprechende Eingriffsvorsprünge vorgesehen sind. Dem Ringbund folgend ist ein Kopplungsabschnitt zum Verbinden mit einem entsprechenden handzuhabenden Werkzeug wie einer Ratsche oder einem Drehmomentschlüssel oder ähnlichem vorgesehen. Das heißt, dass bevorzugt ein Spezialwerkzeug zum Einsatz kommt, jedoch nicht zwingend kommen muss.

Alternativ zur unmittelbaren direkten Form- und Kraftschlussverbindung zwischen Buchse und Bohrung über die Gewindeverbindung selbst ist es in einer zweiten Erfindungsvariante denkbar, dass jede Buchse über ein oder mehrere Befestigungselemente fixiert ist. Bei dieser Ausgestaltung findet keine direkte form- und kraftschlüssige Verbindung zwischen Buchse und Haltescheibe statt, höchstenfalls abgesehen von einem kraftschlüssigen axialen Abstützen der Buchse an einer Anschlagschulter oder dergleichen. Stattdessen wird die Fixierung gegen ein axiales Bewegen mittels wenigstens eines zusätzlichen Befestigungselements realisiert, das in geeigneter Weise an der Haltescheibe fixiert ist und an der jeweiligen Buchse angreift.

Gemäß einer ersten Erfindungsausgestaltung ist es dabei denkbar, dass als Befestigungselemente Schrauben vorgesehen sind, die in Gewindebohrungen an der Haltescheibe eingeschraubt und direkt gegen die Buchse geschraubt sind. Hier findet also eine direkte Interaktion zwischen der Schraube und der Buchse statt, wobei die Schraube in die Gewindebohrung der Haltescheibe eingeschraubt und dort festgelegt ist.

Hierbei ist es denkbar, dass jede Buchse über wenigstens eine in eine radial zur Buchsenlängsachse verlaufende Gewindebohrung eingeschraubte Schraube fixiert ist. Die Haltescheibe ist hierbei pro Bohrung mit einer radial von der äußeren Scheibenmantelfläche nach innen geführten Gewindebohrung versehen, die in der Buchsenbohrung mündet. Zur Montage wird die jeweilige Buchse in die Bohrung eingesetzt und eine Schraube, beispielweise eine kurze Madenschraube, in die Gewindebohrung eingeschraubt und radial gegen die Mantelfläche, üblicherweise eine Zylindermantelfläche, der Buchse geschraubt, so dass die Buchse radial in der Bohrung verklemmt wird. Da die Buchse bevorzugt in einer Richtung axial bereits über eine Anschlagschulter fixiert ist, kann über diese radiale Verklemmung eine sehr gute Buchsenfixierung auch in axialer Richtung erreicht werden. Diese wird aber auch erreicht, selbst wenn die Buchse nicht gegen eine Anschlagschulter abgestützt ist respektive axial in einer Richtung fixiert ist, sondern letztlich ohne Befestigung über das Befestigungselement axial frei beweglich in der Bohrung aufgenommen wäre. Denn durch die radiale Verspannung wird eine sehr gute Buchsenfixierung in beide Axialrichtungen sichergestellt.

Alternativ zur Ausbildung entsprechender radialer Gewindebohrungen ist es auch denkbar, dass jede Buchse über wenigstens eine in eine schräg zur Buchsenlängsachse verlaufende Gewindebohrung eingeschraubte Schraube fixiert ist. Diese Variante bietet sich insbesondere dann an, wenn die jeweilige Buchse gegen eine Anschlagschulter axial abgestützt ist. Die schräg von der Haltescheibenoberfläche zur Bohrung laufende, in diese mündende Gewindebohrung nimmt wiederum eine Schraube, beispielsweise eine Madenschraube, auf, die dann schräg direkt gegen die Buchse geschraubt wird und diese einerseits radial in der Bohrung verspannt, aufgrund des schrägen Winkels aber auch eine gewisse zusätzliche Axialverspannung gegen den Anschlagschultersitz bewirkt. Dabei ist es natürlich denkbar, hier mehr als eine schräge Gewindebohrung pro Buchsenbohrung vorzusehen, beispielsweise zwei einander um 180 Grad versetzt gegenüberliegende schräge Gewindebohrungen, oder vier um 90 Grad versetzte schräge Gewindebohrungen oder ähnliches.

Unabhängig davon, ob nun eine radiale oder schräge Gewindebohrungen vorgesehen sind, sieht eine vorteilhafte Weiterbildung der Erfindung vor, dass an jeder Buchse eine umlaufende, über wenigstens eine Kegelfläche begrenzte Ringnut vorgesehen ist, wobei die wenigstens eine Schraube gegen die Kegelfläche, die Buchse sowohl radial als auch axial verspannend, geschraubt ist. Diese Erfindungsvariante ist insbesondere dann zweckmäßig, wenn die Buchse gegen eine Anschlagschulter in einer Richtung axial abgestützt ist. An der äußeren, zumeist zylindrischen Mantelfläche weist die Buchse eine Nut auf, die über wenigstens eine schräge, bei zylindrischer Buchse kegelförmige umlaufende Fläche begrenzt ist. Die Schraube, die bevorzugt an ihrem vorlaufenden Ende ebenfalls eine entsprechende kegelige Spitze aufweisen kann, wird nun, wenn die Buchse in die Bohrung eingesetzt ist und, da noch nicht fixiert, lose an der Anschlagschulter abgestützt ist, gegen diese Kegelfläche geschraubt. Dies bewirkt nun einerseits eine radiale Verspannung, anderseits aber auch über das Zusammenwirken der buchsenseitigen Kegelfläche und der Schraubenspitze, die wie gesagt auch kegelförmig sein kann, dass zusätzlich eine axiale Spannkraft auf die Buchse ausgeübt wird, die die Buchse fest gegen die Anschlagschulter presst. Hierüber erfolgt also zusätzlich zur radialen Verspannung auch eine axiale Verspannung der Buchse in der Bohrung.

Bei den beiden vorstehenden Varianten ist jeweils wenigstens eine entweder radial oder schräg zur Bohrungslängsachse verlaufende Gewindebohrung vorgesehen. Eine dritte Variante unter Verwendung einer Befestigungsschraube sieht vor, dass jede Buchse über wenigstens eine in eine im wesentlichen parallel zur Buchsenlängsachse verlaufende Gewindebohrung eingeschraubte Schraube, die mit ihrem Schraubenkopf radial gegen die Buchsenaußenseite zur zumindest radialen Verklemmung der Buchse in der Bohrung anliegt, fixiert ist. Bei dieser Variante verläuft also die Gewindebohrung im Wesentlichen parallel zur Buchsenlängsachse. Es kann eine vollständige Parallelität gegeben sein, gegebenenfalls ist auch eine minimale Verkippung beispielsweise um 1° - 2° zur Buchsenlängsachse denkbar. Unabhängig davon wird mit Einschrauben der Befestigungsschraube der Schraubenkopf gegen die Buchsenmantelfläche bewegt, so dass die Buchse wiederum zumindest radial, gegebenenfalls auch axial, in der Buchsenbohrung verspannt wird. Auch hier sitzt die Buchse bevorzugt auf einer Anschlagschulter axial abgestützt auf.

Besonders zweckmäßig ist es in diesem Zusammenhang, wenn die Schraube einen kegeligen Schraubenkopf aufweist, mit dem sie insbesondere bei minimaler Verkippung zur Bohrungslängsachse um beispielsweise 1° - 2° in der Montageendstellung an der Buchsenaußenseite anliegt. Über diese kegelige Schraubenkopfform kann darüber hinaus auch eine Axialkraft auf die Buchse ausgeübt werden, die wiederum geeignet ist, sie auch axial gegen die Anschlagschulter zu verspannen.

Während bei den vorstehend beschriebenen Erfindungsalternativen unter Verwendung von Befestigungsschrauben die Buchsenfixierung nur mittels der Befestigungsschraube selbst erfolgt, sieht eine weitere Erfindungsalternative unter Verwendung eines Befestigungselements vor, dieses als Kombination aus einer Pratze und einer Schraube auszuführen. Gemäß dieser Erfindungsvariante kann jede Buchse über wenigstens eine Pratze, die mittels einer in eine haltescheibenseitig vorgesehene Gewindebohrung eingeschraubten Schraube befestigt ist, und die die Buchse stirnseitig übergreift, fixiert sein. Die Gewindebohrung, in die die Schraube eingeschraubt wird, verläuft hier zweckmäßigerweise im wesentlichen parallel zur Längsachse der Buchsenbohrung. Die Pratze, beispielsweise eine einfache metallene oder aus Kunststoff gefertigte Halteklammer oder ähnliches, weist eine Bohrung auf, durch die die Schraube gesteckt wird, die mit ihrem Schraubenkopf auf der Pratze aufliegt. Wird nun die Schraube in die Gewindebohrung geschraubt, so wird die Pratze gegen die Stirnseite der Buchse geschraubt und liegt dort kraftschlüssig an, so dass sie axial fixiert ist. Bevorzugt ist die Buchse an einer bohrungsseitigen Anschlagschulter in die andere Axialrichtung abgestützt, so dass wiederum eine vollständige Buchsenfixierung gegeben ist.

Eine weitere Erfindungsalternative sieht vor, dass jede Buchse über ein stirnseitig auf die Buchse aufgesetztes, eine Bohrung aufweisendes Deckelelement, das über mehrere, in haltescheibenseitig vorgesehene Gewindebohrungen eingeschraubte Schrauben befestigt ist, fixiert ist. Hier wird pro Buchse zusätzlich ein Deckelelement angeschraubt, das die Buchse stirnseitig übergreift, so dass sie in dieser Richtung am Deckel abgestützt ist. Denkbar wäre es, auch an der gegenüberliegenden Seite einen solchen Deckel anzuschrauben. Zur Vermeidung dieses Aufwands ist bei dieser Variante zweckmäßiger Weise natürlich eine bohrungsseitige Anschlagschulter vorgesehen, an der die Buchse axial abgestützt ist. Zweckmäßigerweise kommen viereckige Deckelelemente zum Einsatz, so dass diese möglichst eng benachbart zueinander positioniert und gleichzeitig auch die Buchsen entsprechend eng benachbart zueinander angeordnet werden können. Eine Fixierung über vier Halteschrauben ist zweckmäßig.

Grundsätzlich kann die Buchse und/oder können die Befestigungselemente bündig in der benachbarten Fläche der Haltescheibe liegen. Das heißt, dass im Falle der direkt verschraubten Buchsen die Buchsen soweit eingeschraubt werden, dass der Buchsenstirnrand bündig zur Haltescheibenoberfläche liegt, oder gegebenenfalls auch etwas vertieft in dieser angeordnet ist. Dies gilt auch bei Fixierung mittels entsprechender Befestigungselemente. Im Falle der radialen oder schräg verlaufenden Gewindebohrungen, in die Madenschrauben eingeschraubt werden, sind diese ohnehin in der Gewindebohrung versenkt aufgenommen. Bei Verwendung einer kegeligen Schraube kann auch diese entsprechend versenkt werden. Aber auch bei Verwendung von Pratzen oder Deckelelementen können diese entsprechend versenkt angeordnet werden, wobei in diesem Fall die ringförmige Buchsenreihe in einer entsprechenden ringförmigen Vertiefung der Haltescheibe ausgebildet ist, in welcher Vertiefung eine versenkte Anordnung von Pratzen respektive Deckelelementen möglich ist.

Neben den Werkstückhalter selbst betrifft die Erfindung ferner eine Werkzeugmaschine, insbesondere eine Schleifmaschine, umfassend wenigstens einen Werkstückhalter der vorstehend beschriebenen Art.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Ansicht eines erfindungsgemäßen Werkstückhalters,
- Fig. 2: eine Perspektivansicht des Werkstückhalters aus Fig. 1,
- Fig. 3: eine Explosionsdarstellung einer ersten Variante eines Werkstückhalters mit direkt in die Halteplatte eingeschraubten Buchsen,
- Fig. 4: eine Teilschnittansicht des Werkstückhalters aus Fig. 3 mit verschraubter Buchse,
- Fig. 5: eine perspektivische Teilansicht eines Werkstückhalters mit radialen Gewindebohrungen,
- Fig. 6: eine geschnittene Teilansicht des Werkstückhalters aus Fig. 5,
- Fig. 7: eine perspektivische Teilansicht eines Werkstückhalters mit unter einem Winkel zur Bohrungslängsachse verlaufenden Gewindebohrungen,
- Fig. 8: eine Teilschnittansicht durch einen Werkstückhalter aus Fig. 7,
- Fig. 9: eine perspektivische Teilansicht eines Werkstückhalters mit Kegelkopfschrauben in zur Bohrungslängsachse parallelen Gewindebohrungen,
- Fig. 10: eine geschnittene Teilansicht des Werkstückhalters aus Fig. 9,
- Fig. 11: eine perspektivische Teilansicht eines Werkstückhalters mit Befestigungselementen in Form von Pratzen,
- Fig. 12: eine geschnittene Teilansicht des Werkstückhalters aus Fig. 11,
- Fig. 13: eine perspektivische Teilansicht eines Werkstückhalters mit Deckelelementen, und
- Fig. 14: eine geschnittene Teilansicht des Werkstückhalters aus Fig. 13.

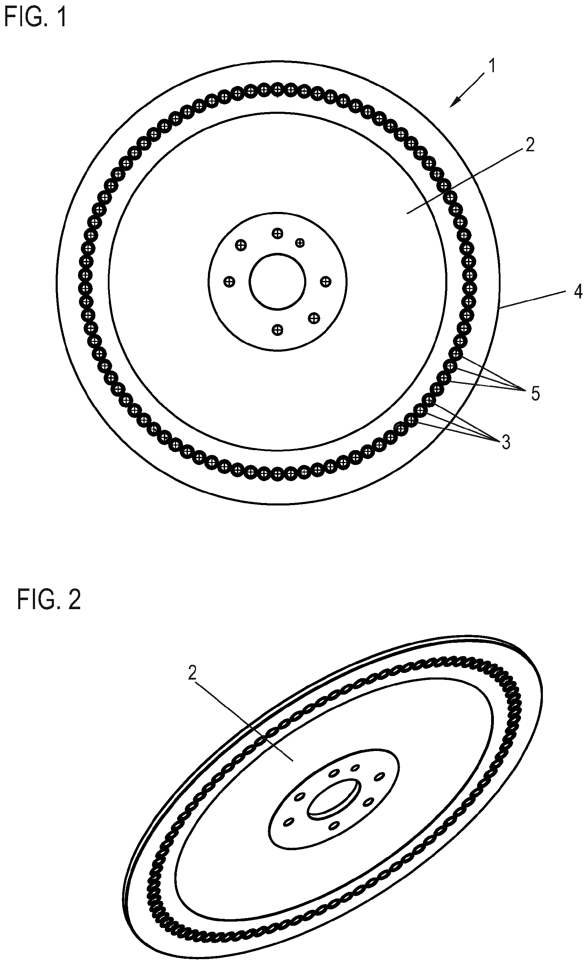

Fig. 1 zeigt einen erfindungsgemäßen Werkstückhalter 1 umfassend eine metallene runde Haltescheibe 2, an der eine Vielzahl einzelner Bohrungen 3 im Bereich des Umfangsrandes 4 der Haltescheibe 2 ausgebildet sind, die in enger Abfolge um den Umfang verteilt angeordnet sind. In jeder Bohrung 3 ist eine hier metallene zylindrische Buchse 5 aufgenommen und über eine geeignete Form- und/oder Kraftschlussverbindung lösbar in der Bohrung fixiert. In jede Buchse 5 kann ein längliches, insbesondere an beiden Enden zu bearbeitendes Werkstück eingesetzt werden, zumeist beispielsweise Zylinderrollen, die an den Enden bzw. Stirnseiten plangeschliffen werden müssen und als Wälzkörper für Wälzlager dienen. Üblicherweise ist das zylindrische Werkstück um die eigene Längsachse drehbar in der Buchse 5 gelagert.

Die Haltescheibe 2 ist relativ dünn, siehe Fig. 2. Ihre Dicke beträgt nur wenige Millimeter, wobei die Dicke zumeist von der Länge der zu bearbeitenden Werkstücke abhängig ist, da diesbezüglich auch die Buchsenlänge zu wählen ist. Ein Bemaßungsbeispiel einer solchen Haltescheibe 2 weist eine Dicke im Bereich zwischen 8-15 mm und einen Durchmesser >500 mm, beispielsweise im Bereich von ca. 650 mm auf. Der Durchmesser richtet sich nicht zuletzt nach der aufnehmbaren Größe des Werkstückhalters 1 in der entsprechenden Schleifmaschine.

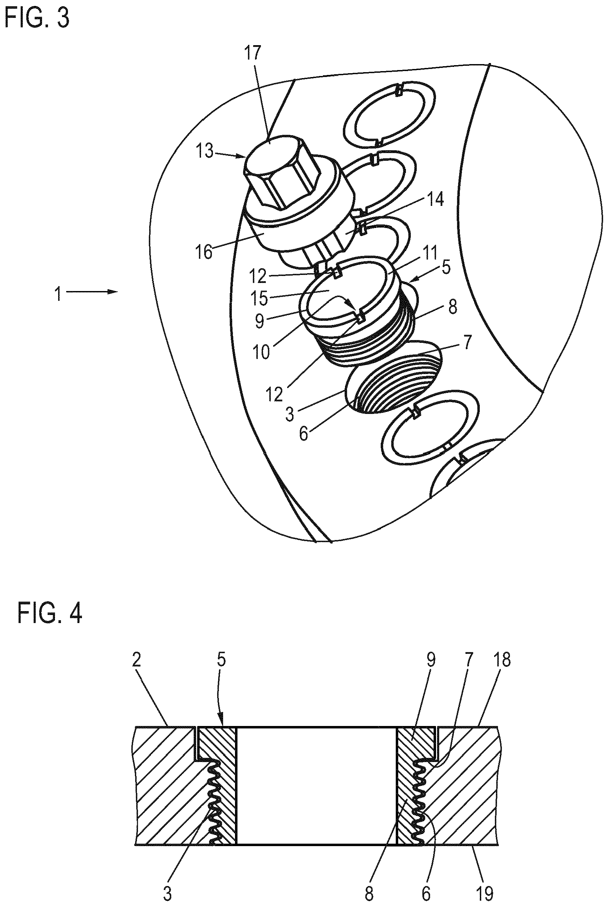

Wie beschrieben sind die einzelnen Buchsen 5 lösbar an der Haltescheibe 2 respektive in den entsprechenden Bohrungen 3 aufgenommen. Ein erstes Ausführungsbeispiel ist in den Figuren 3 und 4 gezeigt.

Fig. 3 zeigt in einer perspektivischen Teilansicht einen Werkstückhalter 1, wobei für gleiche Bauteile gleiche Bezugszeichen verwendet werden. Es ist eine Explosionsdarstellung. Ersichtlich ist eine offene Bohrung 3 dargestellt, die ein Innengewinde 6 aufweist. Ausgebildet ist des Weiteren eine radial nach innen ragende Anschlagschulter 7 (siehe Fig. 4), die als Axialanschlag für die Buchse 5 dient. Die Bohrung 3 läuft durch die gesamte Haltescheibendicke, so dass ein aufgenommenes Werkstück beidseits bearbeitet werden kann. Auch das Innengewinde 6 ist, abgesehen vom Bohrungsbereich bis zur Anschlagschulter 7, über die gesamte Bohrungslänge geschnitten.

Die Buchse 5 ihrerseits weist ein Außengewinde 8 auf, das über einen Teil der Buchsenlänge geschnitten ist. Am oberen Ende der Buchse 5 ist ein radial nach außen ragender Ringbund 9 ausgebildet, der in der Montagestellung, die Einschraubtiefe begrenzend, gegen die Anschlagschulter 7 läuft und dort axial abgestützt ist.

Gezeigt ist des Weiteren eine Werkzeugaufnahme 10 in Form zweier einander diametral gegenüberliegender, in die Stirnseite 11 eingebrachter Vertiefungen 12, in die ein hier gezeigtes Werkzeug 13 formschlüssig eingreift. Das Werkzeug 13 weist einen Eingriffsabschnitt 14 auf, mit dem es in die zylindrische Bohrung 15 der Hülse 5 zu Führungszwecken eingreift. Hieran schließt sich ein radial nach außen abstehender Ringbund 16 an, mit dem das Werkzeug 13 auf der Stirnseite 11 aufliegt, gefolgt von einem Verbindungsabschnitt 17, an dem ein entsprechendes Handhabungselement wie beispielsweise eine Ratsche, ein Schraubenschlüssel oder dergleichen angeschlossen werden kann. Das Werkzeug 13 greift mit entsprechenden Vorsprüngen in die Ausnehmungen 12 ein, so dass bei Drehung des Werkzeugs 13 die Hülse 5 entsprechend ein- und ausgeschraubt werden kann.

Fig. 4 zeigt eine Montagestellung in Form einer Schnittansicht. Gezeigt ist einerseits die Haltescheibe 2 mit ihrer Bohrung 3 sowie dem Innengewinde 6 und der Anschlagschulter 7. Ebenso gezeigt ist die Hülse 5 mit ihrem Außengewinde 8 und dem Ringbund 9, der ersichtlich auf der Anschlagschulter 7 aufliegt.

Wie Fig. 4 anschaulich zeigt, ist die Hülse 5 im gezeigten Ausführungsbeispiel an beiden Haltescheibenflächen 18, 19 bündig, kann aber auch etwas weiter nach innen versenkt sein, steht also nicht über die Scheibenfläche hinaus. Demgegenüber stehen die darin aufgenommenen Werkstücke, also die Zylinderrollen, beidseits aus der Scheibenfläche, da sie stirnseitig plangeschliffen werden sollen. Die Zylinderrollen sind drehbeweglich in den Buchsen 5 aufgenommen, können also während des Schleifvorgangs rotieren, zusätzlich zur Rotation entweder des Werkstückhalters relativ zu den Schleifscheiben und/oder der Schleifscheiben relativ zum Werkstückhalter.

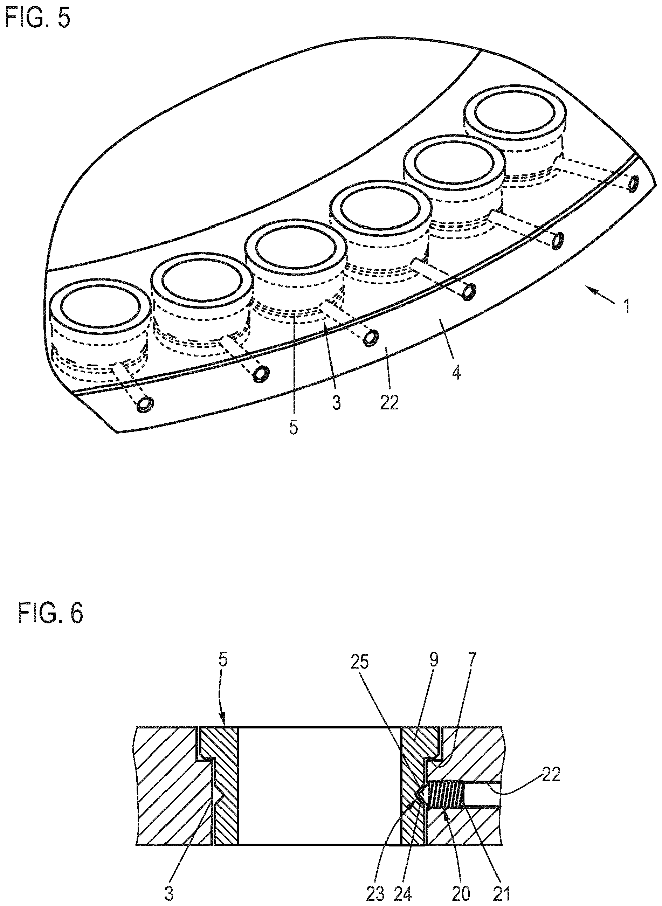

Die Fig. 5 und 6 zeigen ein weiteres Ausführungsbeispiel eines erfindungsgemäßen Werkstückhalters 1. Hier sind bereits die Buchsen 5 in die entsprechenden Bohrungen 3 eingesetzt, wobei die grundsätzliche Geometrie der Bohrungen 3 und der Buchsen 5 dem Ausführungsbeispiel gemäß Fig. 3 und 4 entsprechend. Jedoch weisen hier weder die Bohrung 3 noch die Buchse 5 ein Gewinde auf. Gleichwohl ist aber an jeder Buchse 5 ein Ringbund 9 vorgesehen, wie auch die Bohrung 3 eine Anschlagschulter 7 aufweist. Dies zeigt Fig. 6 anschaulich.

Bei dieser Ausgestaltung ist jede Buchse 5 über den Anschlag des Ringbunds 9 an der Anschlagschulter 7 in einer Richtung axial abgestützt. Die radiale Fixierung und gleichzeitig die axiale Fixierung in die andere Richtung erfolgt über ein Befestigungselement 20 in Form einer Schraube 21, die in eine radiale Gewindebohrung 22 eingeschraubt ist. Die Gewindebohrungen 22 erstrecken sich von der Umfangsfläche 4 der Haltescheibe 2 radial nach innen. Wie Fig. 5 und insbesondere der Schnittansicht gemäß Fig. 6 zu entnehmen ist, weist jede zylindrische Buchse 5 eine Ringnut 23 auf, die über zumindest eine Kegelfläche 24 begrenzt ist. Gegen diese Kegelfläche 24 läuft die hier beispielsweise eine Kegelspitze 25 aufweisende Schraube 21, eine kleine Madenschraube. Dies bewirkt zum einen, dass die Buchse 5 radial in der Bohrung 3 fixiert wird und beispielsweise in der Bohrung entsprechend verspannt oder verklemmt wird. Zum anderen wird über das Anlaufen der Kegelspitze 25 gegen die Kegelfläche 24 eine Axialkraft in Richtung der Buchsenlängsachse erzeugt, die bewirkt, dass der Ringbund 9 zusätzlich gegen die Anschlagschulter 7 verspannt wird. Über die Verschraubung ist als die radiale und axiale Sicherung der Buchse 5 sichergestellt.

Zum Lösen respektive Austauschen einer Buchse 5 ist lediglich die Schraube 21 etwas aus ihrer Haltestellung zu schrauben, so dass die Buchse 5 herausgezogen werden kann, wonach eine neue Buchse 5 eingesetzt und wiederum über die Schraube 21 radial und axial verspannt werden kann.

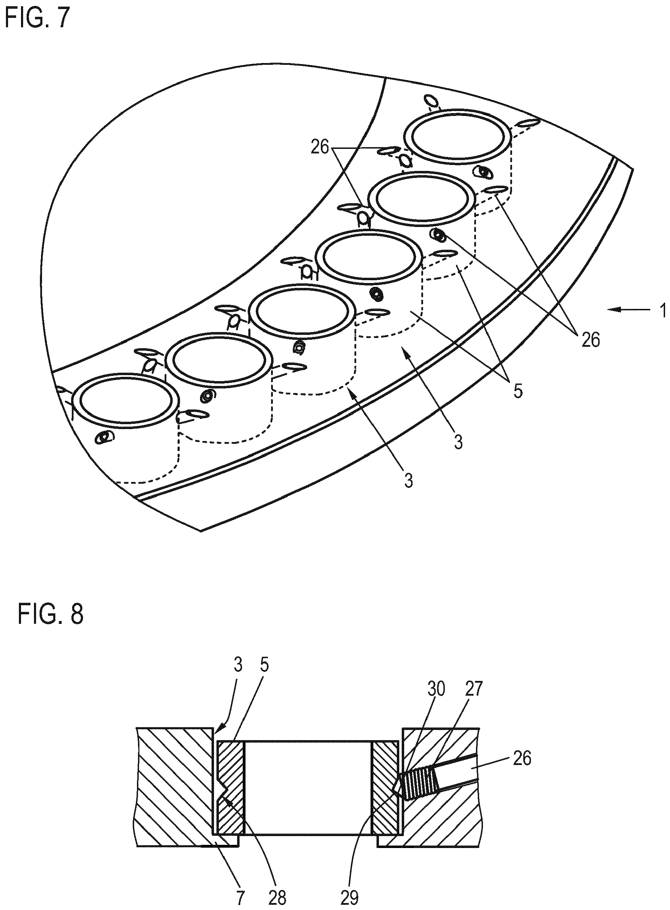

Fig. 7 zeigt eine Variante eines Werkstückhalters 1, bei dem exemplarisch zylindrische Buchsen 5 in den entsprechenden Bohrungen 3 aufgenommen sind, siehe hierzu auch die Schnittansicht gemäß Fig. 8. Jede Bohrung 3 ist wiederum mit einer hier endständigen Anschlagschulter 7 versehen, gegen die die Buchse 5 mit ihrer vorlaufenden Stirnfläche anläuft.

Zur Fixierung sind hier im gezeigten Beispiel pro Bohrung 3 respektive Buchse 5 vier schräg zur Bohrungslängsachse verlaufende Gewindebohrungen 26 ausgebildet, in die jeweils eine Schraube 27, wiederum beispielsweise eine kleine Madenschraube, eingeschraubt ist, wie Fig. 8 zeigt. Die zylindrische Buchse 5 weist wiederum, ähnlich wie beim Ausführungsbeispiel gemäß Fig. 5 und 6, eine umlaufende Ringnut 28 auf, die über eine Kegelfläche 29 begrenzt ist, gegen die wiederum die hier beispielsweise vorgesehene Kegelspitze 30 der Schraube 26 geschraubt ist. Dies führt einerseits wiederum zur radialen Fixierung respektive Verspannung, andererseits wird wiederum eine Axialkraftkomponente aufgebaut, die die Hülse 5 axial gegen die Anschlagschulter 7 spannt.

Wie Fig. 8 zeigt, ist auch hier jede Buchse 5 beidseits an der Haltescheibe leicht versenkt fixiert. Auch hier kann das Lösen durch Ausschrauben der vier Schrauben 27 aus ihrem Eingriff in die Ringnut 28 erfolgen, so dass die Buchse 5 entnommen und eine neue Buchse eingesetzt und wieder verspannt werden kann.

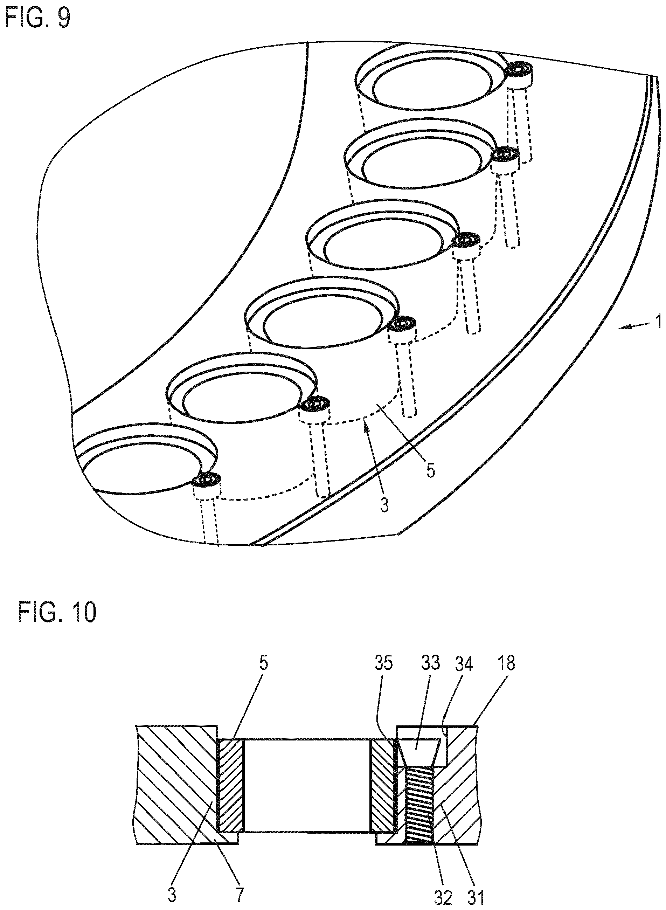

Fig. 9 zeigt einen Werkstückhalter 1, bei dem, ähnlich wie beim Ausführungsbeispiel gemäß der Fig. 7 und 8, wiederum zylindrische Buchsen 5 in die Bohrungen 3 eingesetzt sind. Die Bohrung 3 ist wiederum endseitig über eine Anschlagschulter 7 begrenzt, gegen die die Hülse 5 axial abgestützt ist.

Zur Fixierung ist hier eine im Wesentlichen parallel zur Längsachse der Bohrung verlaufende Gewindebohrung 31 vorgesehen, in die eine Schraube 32 eingeschraubt wird. Gegebenenfalls kann die Gewindebohrung um ca. 1° - 2° zur Bohrungslängsachse verkippt sein. Die Schraube 32 weist einen kegeligen Schraubenkopf 33 auf, der in der Montagestellung gemäß der Fig. 9 und 10 in einer entsprechenden Aufnahme 34 an der Haltescheibenfläche 18 versenkt aufgenommen ist, und der andererseits an der Außenmantelfläche 35 der Buchse 5 anliegt. Die Anordnung ist derart, dass die Buchse 5 zumindest radial in der Bohrung 3 verspannt wird. Grundsätzlich kann über diese Kegelgeometrie aber auch eine gewisse Axialkraftkomponente erzeugt werden, die die Buchse 5 gegen die Anschlagschulter 7 presst.

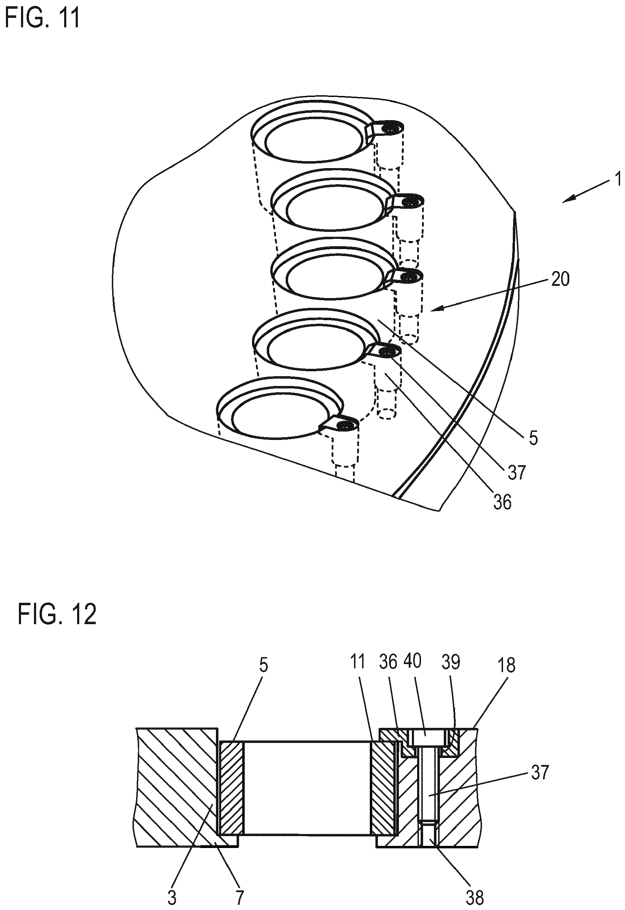

In Fig. 11 ist ein Werkstückhalter 1 gezeigt, bei dem die auch hier zylindrischen Buchsen 5 über ein Befestigungselement 20 in Form einer Kombination aus einer Pratze 36 und einer Schraube 37 gebildet ist. Die Buchse 5 ist wiederum in die über eine Anschlagschulter 7 axial begrenzte Bohrung 3 eingesetzt. Benachbart und bevorzugt parallel zur Längsachse der Bohrung 3 ist eine Gewindebohrung 38 vorgesehen, in die die Schraube 37, die die Pratze 36 in einer Durchbrechung 39 durchgreift, eingeschraubt ist. Der Schraubenkopf 40 liegt an der Pratze 36 an und drückt diese gegen die Stirnfläche 11 der Buchse 5, wie Fig. 12 anschaulich zeigt. Hierüber wird die Buchse 5 einerseits gegen die Anschlagschulter 7 axial verspannt, andererseits zur gegenüber liegenden Seite axial gesichert.

Ersichtlich ist auch hier die Anordnung derart, dass einerseits die Buchse 5, andererseits aber auch die Pratze 36 nebst Schraubenkopf 40 bündig zur Scheibenfläche 18 oder leicht vertieft hierzu positioniert sind.

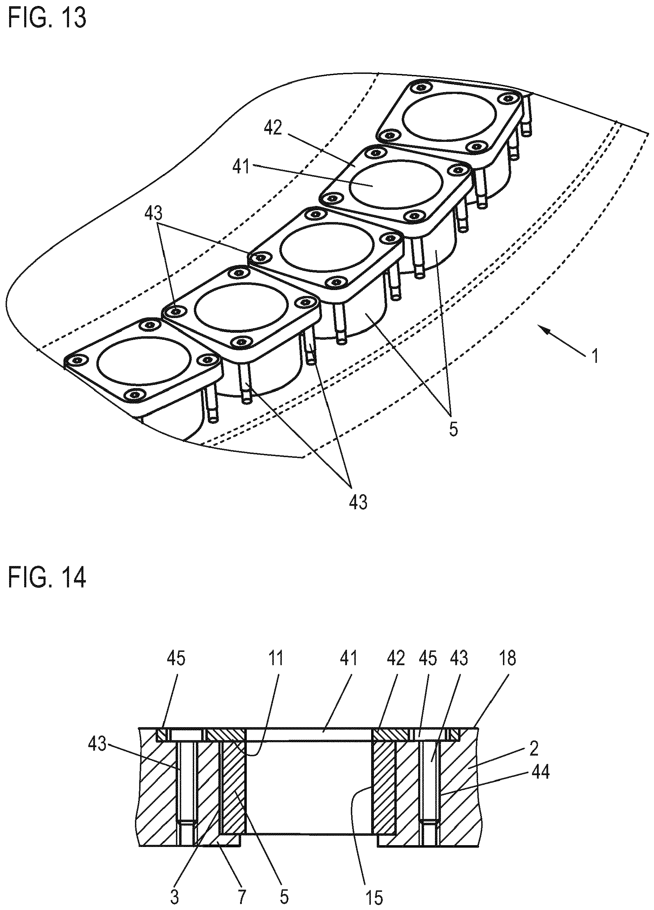

Die Fig. 13 und 14 (in Fig. 13 ist die Haltescheibe 2 aus Darstellungsgründen gestrichelt gezeigt) zeigen schließlich eine Ausgestaltung eines Werkstückhalters 1, bei dem die Buchsen 5, wiederum einfache zylindrische Buchsen, über ein eine Bohrung 41 aufweisendes Deckelelement 42 fixiert sind. Der Durchmesser der Bohrung 41 entspricht mindestens dem Durchmesser der Bohrung 15 der Buchse 5, kann aber auch geringfügig größer sein. In jedem Fall liegt das hier rechteckige, insbesondere quadratische Deckelelement 42 auf der Stirnseite 11 der Buchse 5 auf und spannt diese gegen die Anschlagschulter 7, die in die Bohrung 3 ragt.

Die Befestigung der Deckelelemente 42 erfolgt jeweils über Schrauben 43, die in den vier Ecken der Deckelelemente 42 positioniert sind und in entsprechende Gewindebohrungen 44 der Haltescheibe 2 eingeschraubt sind. Die Schraubenköpfe 45 der Halteschrauben 43 sind auch hier entweder bündig zur Oberseite 18, ebenso wie das Deckelelement 42, angeordnet, oder liegen, gegebenenfalls auch wie das Deckelelement 42, geringfügig vertieft.

Allen Ausführungsformen gemein ist, dass die jeweilige Buchse 5 in der jeweiligen Bohrung 3 über eine Form- und/oder Kraftschlussverbindung lösbar fixiert ist. Diese Fixierung kann entweder ohne zusätzliche Befestigungselemente erfolgen, wie über die unmittelbare Verschraubung der Außengewindebuchse in der Innengewindebohrung gemäß der Fig. 3 und 4. Alternativ kann auch ein oder können mehrere Befestigungselemente in Form von Schrauben verwendet werden, insbesondere radial oder schräg direkt gegen die Buchse geschraubte Schrauben, insbesondere versenkte Madenschrauben oder ähnliches. Auch komplexere Befestigungssysteme unter Verwendung von Pratzen-Schrauben-Halterungen oder separaten Deckelelementen und Befestigungsschrauben sind denkbar. Dabei ist darauf hinzuweisen, dass die gezeigten Ausführungsbeispiele nicht abschließend sind. Weitere Befestigungsvarianten, die jedoch wieder gelöst werden können, sind grundsätzlich denkbar.

## Patentansprüche

1. Werkstückhalter zur Aufnahme mehrerer, insbesondere an beiden Enden, zu bearbeitender länglicher Werkstücke, umfassend eine Haltescheibe (2) mit mehreren um den Umfang verteilt angeordneten Bohrungen (3), wobei in jeder Bohrung (3) eine jeweils ein zu bearbeitendes Werkstück aufnehmende Buchse (5) aufgenommen ist, die an der Haltescheibe (2) fixiert ist, **dadurch gekennzeichnet, dass** jeder Buchse (5) über wenigstens eine Form- und/oder Kraftschlussverbindung lösbar in der Bohrung (3) fixiert ist.

2. Werkstückhalter nach Anspruch 1, **dadurch gekennzeichnet, dass** jede Bohrung (3) eine radial nach innen ragende Anschlagschulter (7) aufweist, an der die Buchse (5) axial abgestützt ist, oder dass die Buchse (5) einen radialen nach außen ragenden Ringbund (9) aufweist, mit dem sie axial an der Haltescheibe (2) oder der Anschlagschulter (7) abgestützt ist.

3. Werkstückhalter nach Anspruch 1 oder 2, **dadurch gekennzeichnet, dass** jede Bohrung (3) ein Innengewinde (6) und jede Buchse (5) ein Außengewinde (8) aufweist, mit dem die Buchse (5) in das Innengewinde (6) geschraubt ist.

4. Werkstückhalter nach Anspruch 3, **dadurch gekennzeichnet, dass** an jeder Buchse (5) eine Werkzeugaufnahme (10) für ein der Montage und Demontage der Buchse (5) dienendes Werkzeug (13) vorgesehen ist.

5. Werkstückhalter nach Anspruch 4, **dadurch gekennzeichnet, dass** die Werkzeugaufnahme (10) in Form wenigstens zweier in die Buchse (5) stirnseitig eingebrachter Vertiefungen (12), in die entsprechende Vorsprünge des Werkzeugs (13) eingreifen, ausgeführt ist.

6. Werkstückhalter nach Anspruch 1 oder 2, **dadurch gekennzeichnet, dass** jede Buchse (5) über ein oder mehrere Befestigungselemente (20) fixiert ist.

7. Werkstückhalter nach Anspruch 6, **dadurch gekennzeichnet, dass** als Befestigungselemente (20) Schrauben (21, 27, 32) vorgesehen sind, die in Gewindebohrungen (22, 26, 31) an der Haltescheibe (2) eingeschraubt und direkt gegen die Buchse (5) geschraubt sind.

8. Werkstückhalter nach Anspruch 7, **dadurch gekennzeichnet, dass** jede Buchse (5) über wenigstens eine in eine radial zur Buchsenlängsachse verlaufende Gewindebohrung (22) eingeschraubte Schraube (21) fixiert ist.

9. Werkstückhalter nach Anspruch 7, **dadurch gekennzeichnet, dass** jede Buchse (5) über wenigstens eine in eine schräg zur Buchsenlängsachse verlaufende Gewindebohrung (27) eingeschraubte Schraube (26) fixiert ist.

10. Werkstückhalter nach Anspruch 8 oder 9, **dadurch gekennzeichnet, dass** an jeder Buchse eine umlaufende, über wenigstens eine Kegelfläche (24, 29) begrenzte Ringnut (23, 28) vorgesehen ist, wobei die wenigstens eine Schraube (21, 27) gegen die Kegelfläche (24, 29), die Buchse (5) sowohl radial als auch axial verspannend, geschraubt ist.

11. Werkstückhalter nach Anspruch 7, **dadurch gekennzeichnet, dass** jede Buchse (5) über wenigstens eine in eine im Wesentlichen parallel zur Buchsenlängsachse verlaufende Gewindebohrung (31) eingeschraubte Schraube (32), die mit ihrem Schraubenkopf (33) radial gegen die Buchsenaußenseite (35) zur zumindest radialen Verklemmung der Buchse (5) in der Bohrung (3) anliegt, fixiert ist.

12. Werkstückhalter nach Anspruch 11, **dadurch gekennzeichnet, dass** die Schraube (32) einen kegeligen Schraubenkopf (33) aufweist.

13. Werkstückhalter nach Anspruch 6, **dadurch gekennzeichnet, dass** jede Buchse (5) über wenigstens eine Pratze (36), die mittels einer in eine haltescheibenseitig vorgesehene Gewindebohrung (38) eingeschraubten Schraube (37) befestigt ist, und die die Buchse (5) stirnseitig übergreift, fixiert ist.

14. Werkstückhalter nach Anspruch 1 oder 2, **dadurch gekennzeichnet, dass** jede Buchse (5) über ein stirnseitig auf die Buchse (5) aufgesetztes, eine Bohrung (41) aufweisendes Deckelelement (42), das über mehrere in haltescheibenseitig vorgesehene Gewindebohrungen (44) eingeschraubte Schrauben (43) befestigt ist, fixiert ist.

15. Werkstückhalter nach einem der vorangehenden Ansprüche, **dadurch gekennzeichnet, dass** die Buchsen (5) und/oder die Befestigungselemente (20) bündig oder vertieft in der benachbarten Fläche (18) der Haltescheibe (2) liegen.

16. Werkzeugmaschine, insbesondere Schleifmaschine, umfassend wenigstens einen Werkstückhalter (1) nach einem der vorangehenden Ansprüche.
